Europäisches Patentamt

European Patent Office

Office européen des brevets

(11) Veröffentlichungsnummer: **0 142 491**
**A1**

(12) # EUROPÄISCHE PATENTANMELDUNG

(21) Anmeldenummer: **84890213.6**

(22) Anmeldetag: **09.11.84**

(51) Int. Cl.⁴: **A 47 J 36/20**

(30) Priorität: **15.11.83 AT 4021/83**

(43) Veröffentlichungstag der Anmeldung:
**22.05.85 Patentblatt 85/21**

(84) Benannte Vertragsstaaten:
**BE CH DE FR GB IT LI LU NL SE**

(71) Anmelder: **Gabmayer, August**
**Herzgasse 51**
**A-1100 Wien(AT)**

(72) Erfinder: **Gabmayer, August**
**Herzgasse 51**
**A-1100 Wien(AT)**

(74) Vertreter: **Haffner, Thomas M., Dr. et al,**
**Patentanwaltskanzlei Dipl.-Ing. Adolf Kretschmer Dr.**
**Thomas M. Haffner Schottengasse 3a**
**A-1014 Wien(AT)**

(54) **Gerät zum Kochen, Wärmen, Vorbereiten und/oder Anrichten von verschiedenen Speisen gemeinsam und Einrichtungen zum Füllen und Stapeln des Gerätes.**

(57) Ein Gerät zum Kochen, Wärmen, Vorbereiten und/oder Anrichten von verschiedenen Speisen gemeinsam, beispielsweise Gemüsen, weist, ein, gegebenenfalls mit Durchbrechungen ausgebildetes gehäuse (3) auf, welches aus Seitenwänden (2, 16), mehreren Trennplatten (4) und gegebenenfalls einer Deckplatte besteht und durch eine im wesentlichen ebene Bodenplatte (9, 15) abgeschlossen ist, wobei die Trennplatten (4) quer zur Bodenplatte (9, 15) verlaufen. Um ein formschönes Anrichten der in diesem Gerät vorbereiteten Speisen auf einem Teller zu ermöglichen, ist die Bodenplatte (9, 15) in ihrer Ebene verschiebbar an das Gehäuse angeschlossen und quer zu den Seitenwänden (2, 16) am Gehäuse geführt und von diesem seitlich abziehbar. Die Innenflächen der Seitenwände, die Trennplatten und die obere Oberfläche der Bodenplatte sind glatt und ohne Vorsprünge ausgebildet, so daß das Gerät einfach auf einem Teller aufgesetzt werden kann, worauf die Bodenplatte seitlich abgezogen wird und die Speisen in der durch die Trennplatten bestimmten Anordnung einwandfrei auf den Teller abgelegt werden können, wodurch ein formschönes Anrichten ermöglicht wird. Es kann eine Verkaufspackung mit der gleichen Facheinteilung wie das Gerät auf das Gerät aufgesetzt und durch Anschläge in seiner Lage relativ zum Gerät bestimmt werden, wodurch das Gerät in einfacher Weise gefüllt werden kann.

FIG.1

EP 0 142 491 A1

Gerät zum Kochen, Wärmen, Vorbereiten und/oder
Anrichten von verschiedenen Speisen gemeinsam
und Einrichtungen zum Füllen und Stapeln des
Gerätes

Die Erfindung bezieht sich auf ein Gerät zum
Kochen, Wärmen, Vorbereiten und/oder Anrichten
von verschiedenen Speisen gemeinsam, beispielsweise Gemüsen, mit einem, gegebenenfalls Durchbrechungen aufweisenden, Gehäuse, welches aus
Seitenwänden, mehreren Trennplatten und gegebenenfalls einer Deckplatte besteht und durch eine im
wesentlichen ebene Bodenplatte abgeschlossen ist,
wobei die Trennplatten quer zur Bodenplatte verlaufen. Insbesondere bei Gemüseplatten ist es erforderlich, verschiedene Arten von Gemüse gemeinsam
anzurichten. Bisher mußten diese verschiedenen
Arten von Gemüse gesondert gekocht und/oder gesondert gewärmt werden. Ein formschönes Anrichten
erforderte einen beträchtlichen Zeitaufwand und
infolge dieses Zeitaufwandes war auch der Nachteil
gegeben, daß die Gemüseplatte beim Anrichten auskühlte.
Aus der CH-PS 286.818 ist ein solches Gerät bekanntgeworden, welches als Einsatz in einen Kochtopf ausgebildet ist. Es wird hier wohl, da das Gehäuse
durch Trennwände unterteilt ist, das Kochen und
Wärmen von verschiedenen Speisen gemeinsam ermöglicht, jedoch müssen zum Zwecke des Anrichtens die
Speisen dem Gehäuse gesondert entnommen werden. Dies
ist dadurch ermöglicht, daß die Seitenwände des
Gehäuses durch einen Verschluß zusammengehalten werden
und geöffnet werden können und daß der Boden mit Hilfe
eines Bajonettverschlusses an den Seitenwänden befestigt ist und abgenommen werden kann. Dies erfordert einen beträchtlichen Aufwand beim Anrichten.

0142491

- 2 -

Die Erfindung zielt nun darauf ab, ein Gerät zu
schaffen, welches nicht nur das Kochen und Aufwärmen
verschiedener Speisen gemeinsam ermöglicht, sondern
auch das Anrichten dieser Speisen wesentlich erleichtert. Die Erfindung besteht hiebei im wesentlichen darin, daß die Bodenplatte in ihrer Ebene
verschiebbar an das Gehäuse angeschlossen ist und
quer zu den Seitenwänden am Gehäuse geführt und von
diesem abziehbar ist. Durch die Erfindung wird somit ermöglicht, verschiedene Speisen gemeinsam zu
kochen, aufzuwärmen und vorzubereiten. Es können
auch vorgekochte Speisen oder beispielsweise tiefgekühlte Speisen gemeinsam aufgewärmt werden. Dadurch
aber, daß die Bodenplatte in ihrer Ebene verschiebbar
an das Gehäuse angeschlossen ist und quer zu den
Seitenwänden am Gehäuse geführt und von diesem abziehbar ist, wird es ermöglicht, das Gehäuse auf einen
Teller aufzusetzen und durch seitliches Abziehen der
Bodenplatte die verschiedenen durch die Trennplatten getrennten Speisen auf den Teller geordnet abzulegen, so daß
in einfacher Weise ein formschönes Anrichten ermöglicht
wird. Dadurch, daß die Bodenplatte seitlich abgezogen
wird, wird der Aufbau der verschiedenen Speisen bzw.
der verschiedenen Gemüsearten in der durch die Trennplatten bestimmten Anordnung ermöglicht. Gemäß der
Erfindung sind hiebei vorzugsweise die Innenflächen
der Seitenwände, die Trennplatten und die obere Oberfläche der Bodenplatte glatt ausgebildet. Dadurch,
daß die obere Oberfläche der Bodenplatte glatt und
ohne Vorsprünge ausgebildet ist, wird der Aufbau der
Speisen auf den Teller durch das seitliche Abziehen
der Bodenplatten nicht gestört und dadurch, daß die
Innenflächen der Seitenwände und die Trennplatten
gleichfalls glatt und ohne Vorsprünge ausgebildet sind, wird eine glatte und ungestörte Übergabe der Speisen in ihrer durch die Trennwände bestimmten Anordnung auf den Teller beim Abheben des Gehäuses vom Teller gewährleistet.

Gemäß der Erfindung kann die Bodenplatte in einer Schieberführung der Seitenwände gehalten sein. Eine solche Schieberführung hat den Vorteil, daß die Bodenplatte während des Kochens, Wärmens und/oder Vorbereitens der Speisen ausreichend fest mit dem Gehäuse verbunden ist. Es kann aber gemäß der Erfindung auch die Anordnung so getroffen sein, daß die Bodenplatte und/oder die Seitenwände zumindest teilweise aus ferromagnetischem Material bestehen und daß die Bodenplatte durch zumindest einen Magnet am Gehäuse gehalten ist. Auch bei einer solchen Ausbildung ist die Bodenplatte bis zum Anrichten fest am Gehäuse gehalten und kann in ihrer Ebene leicht vom Gehäuse abgezogen werden. Eine solche magnetische Ausbildung hat den Vorteil, daß die Reinigung des Gerätes leichter ist als die Reinigung einer Schieberführung. Es wäre auch möglich, die Bodenplatte einfach mit einer Klammer, welche das Gehäuse und die Bodenplatte umfaßt, am Gehäuse festzulegen. In diesem Falle kann die Klammer abgenommen werden, wenn das Gerät auf den Anrichteteller aufgesetzt wird, jedoch muß die Bedienungsperson dann die Bodenplatte mit den Fingern halten. In allen Fällen können die Seitenwände mit der Deckplatte starr verbunden oder mit der Deckplatte einteilig ausgebildet sein.

Die Trennplatten können mit dem Gehäuse starr verbunden sein. Gemäß der Erfindung sind sie aber vorzugsweise einzeln lösbar in das Gehäuse eingesetzt.

- 4 -

0142491

Eine Ausbildung, bei welcher die Trennplatten lösbar in das Gehäuse eingesetzt sind, hat den Vorteil, daß die Trennplatten auswechselbar sind und das Gerät mit verschiedenen Einteilungen der durch die Trennplatten gebildeten Fächer ausgestattet werden kann. Abgesehen davon wird auch die Reinigung des Gerätes erleichtert. Es kann beispielsweise gemäß einer vorteilhaften Ausführungsform der Erfindung die Trennplatte von einzelnen sternförmig angeordneten Platten gebildet sein, die durch einen zentralen Bolzen, beispielsweise einen Schraubbolzen, im Gehäuse gehalten sind. Dadurch sind die durch die Trennplatten gebildeten Fächer des Gehäuses in einfacher Weise veränderbar. Dieses Gehäuse kann hiebei einen beliebigen Grundriß aufweisen. Es kann z.B. der Grundriß auch nach der Gastronorm ausgebildet sein, welche bestimmte Verhältnisse zwischen Länge und Breite festlegt. In vorteilhafter Weise kann das Gehäuse kreisrund ausgebildet sein. In diesem Falle können die Trennplatten in beliebiger Winkeleinteilung gegeneinander versetzt und durch den zentralen Bolzen festgespannt werden.

Gemäß der Erfindung weist zweckmäßig die Bodenplatte an ihrem Rand einen Handgriff auf, so daß die Bodenplatte beim Anrichten leicht seitlich abgezogen werden kann.

Gehäuse, Deckplatte und/oder Bodenplatte können auch von Sieben gebildet sein. Alle Teile des Gerätes sollen aus lebensmittelechtem, hitzebeständigem, kältebeständigem und wasserbeständigem Material bestehen.

Das Gerät kann bei einer vorteilhaften Ausführungsform der Erfindung auch als Verkaufspackung für die betreffenden Speisen ausgebildet sein. In diesem Falle wird es zweckmäßig sein, das Gerät aus Kunststoff auszubilden, wobei die betreffenden Speisen in tiefgekühltem Zustand bereits in den durch die Trennwände unterteilten Fächern liegen. Es muß dann nur noch die äußere Hülle abgenommen und das Gerät aufgewärmt bzw. in ein Wasserbad eingesetzt werden.

Gemäß der Erfindung besteht eine vorteilhafte Einrichtung zum Füllen des Gerätes aus einer Verkaufspackung, welche Begrenzungswände und Zwischenwände in gleicher Anordnung wie die Seitenwände und Trennplatten des Gehäuses des Gerätes aufweist, wobei die Verkaufspackung und das Gehäuse mit Anschlagmitteln ausgestattet sind, welche die deckungsgleiche Lage der Begrenzungswände mit den Seitenwänden und der Zwischenwände mit den Trennplatten bestimmen. In einer solchen Verkaufspackung können in den durch die Begrenzungswände und Zwischenwände gebildeten Fächern die betreffenden Speisen in tiefgekühltem Zustand liegen. Es kann nach Entfernung einer Abdeckfolie die Verkaufspackung auf das Gerät aufgesetzt werden und da sie durch die Anschlagmittel in der richtigen Lage gehalten ist, können die Speisen einfach in die betreffenden Fächer des Gerätes fallen. In diesem Falle kann die Verkaufspackung einfach aus Karton bestehen. Ein solches Anschlagmittel kann beispielsweise gemäß der Erfindung dadurch geschaffen werden, daß die Verkaufspackung einen vorstehenden Rand für den Eingriff in die Schieberführung des Gehäuses aufweist, wobei auch Anschläge der Verkaufspackung mit den Enden der Schieberführung zusammenwirken können. Im Kühlschrank oder im Kühlhaus eines Gastbetriebes können gefüllte und vorbereitete Geräte als Vorräte gehalten werden. Zu diesem Zweck ist es günstig, diese Geräte zu stapeln. Eine erfindungsgemäße Einrichtung zum Stapeln solcher Geräte kann xxxxxxxxxxxxxxxxxxx von einem Zwischenstück gebildet sein, dessen eine Oberfläche eine Auflage für die Bodenplatte des Gerätes und dessen andere Oberfläche Auflageflächen für die Abstützung auf der Deckplatte des Gerätes und eine Durchtrittsöffnung für den Handgriff des Gehäuses aufweist.

In der Zeichnung ist die Erfindung anhand von Ausführungsbeispielen schematisch erläutert.

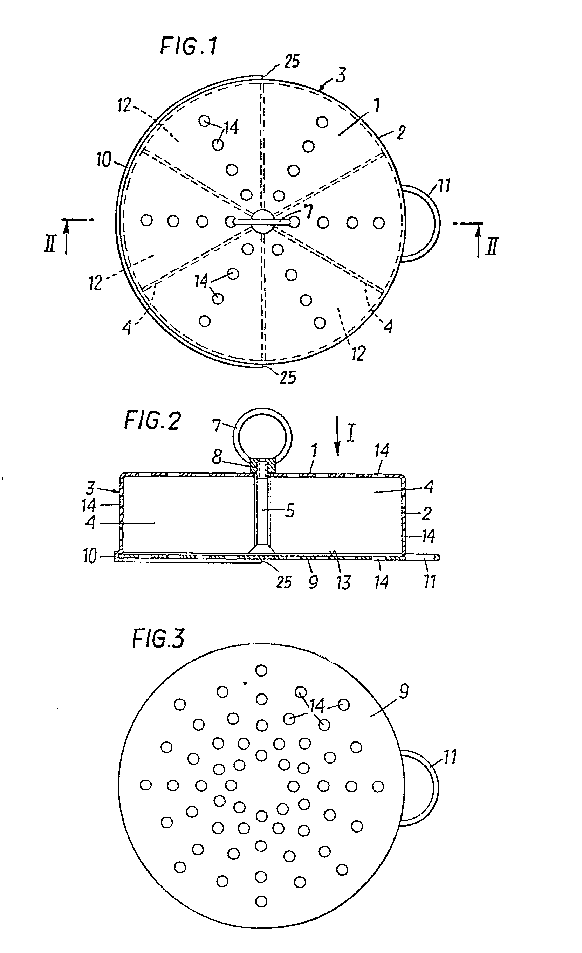

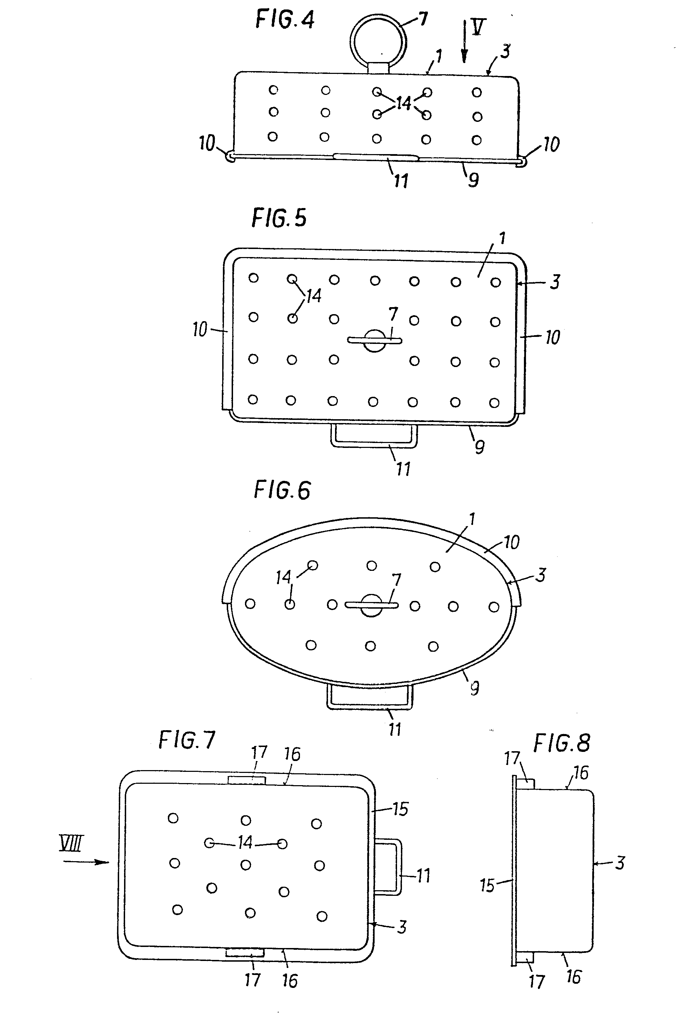

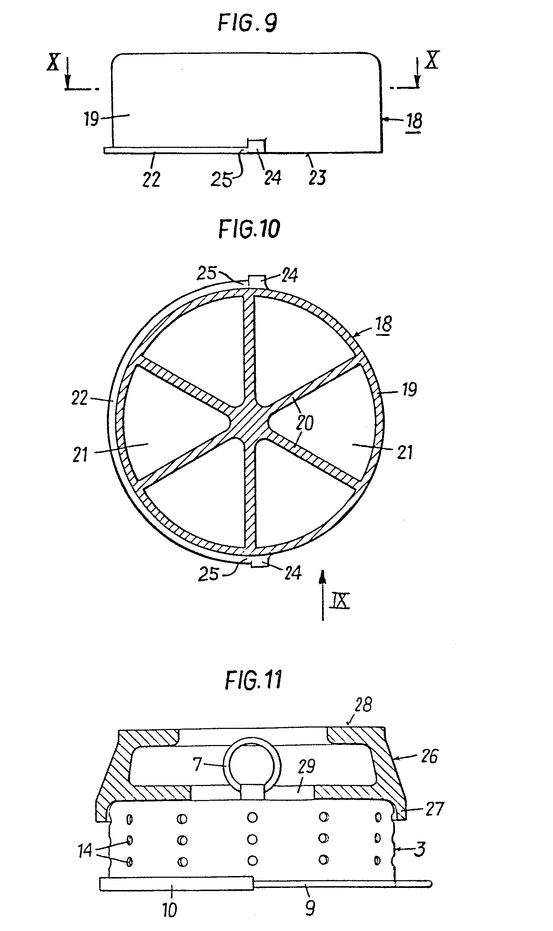

Fig. 1, 2 und 3 zeigen eine Ausführungsform des Gerätes mit kreisrundem Grundriß. Hiebei stellt Fig. 1 eine Draufsicht in Richtung des Pfeiles I der Fig. 2, Fig. 2 einen Querschnitt nach Linie II - II der Fig. 1 dar. Fig. 3 zeigt eine Draufsicht auf die Bodenplatte. Fig. 4 und 5 zeigen eine abgewandelte Ausführungsform mit rechteckigem Grundriß, wobei Fig. 4 eine Seitenansicht in Richtung des Pfeiles IV der Fig. 5 und Fig. 5 eine Draufsicht in Richtung des Pfeiles V der Fig. 4 darstellt. Fig. 6 zeigt eine ovale Ausführungsform eines Gerätes. Hiebei stellt Fig. 6 eine Draufsicht auf das Gerät dar, während als Seitenansicht wieder die Fig. 4 gilt. Fig. 7 und 8 zeigen eine Ausführungsform, bei welcher die Bodenplatte durch Magnete festgehalten wird. Hiebei zeigt Fig. 7 eine Draufsicht auf das Gerät und Fig. 8 einen Schnitt nach Linie VIII - VIII der Fig. 7.

Fig. 9 und 10 zeigen eine Verkaufspackung, wobei Fig. 9 eine Seitenansicht in Richtung des Pfeiles IX der Fig. 10 und Fig. 10 einen Schnitt nach Linie

X - X der Fig. 9 darstellt. Fig. 11 zeigt ein Zwischenstück für die Stapelung von Geräten.

Bei der Ausführungsform nach Fig. 1 bis 3 stellt 1 die Deckplatte und 2 die Seitenwände des Gehäuses 3 dar. Bei dieser Ausführungsform ist die Deckplatte 1 mit den Seitenwänden 2 einteilig ausgebildet. In das Gehäuse 3 sind Trennwände 4 lösbar eingesetzt. Durch einen zentralen Bolzen 5 mit einem Kopf 6 sind die Trennwände 4 im Gehäuse 3 festgespannt. Der Bolzen 5 ist an seinem Ende mit einem Schraubengewinde ausgebildet und ein Handgriff 7 weist ein Muttergewinde 8 für den Bolzen 5 auf. Bei dieser Ausführungsform können somit beliebig viele Trennwände 4 in beliebigen Winkelstellungen in das Gehäuse 3 eingesetzt werden. Der untere Rand des Gehäuses ist durch eine Bodenplatte 9 abgedeckt, welche mit dem Gehäuse 3 lösbar verbunden ist. Die Bodenplatte ist mit dem Gehäuse 3 durch eine an den freien Rändern der Seitenwände 2 angeordnete Schieberführung 10 verbunden und kann beim Anrichten mittels eines Handgriffes 11 seitlich abgezogen werden. In den durch die Deckplatte 1, die Seitenwände 2, die Bodenplatte 9 und die Trennplatten 4 gebildeten Fächern 12 sind im Falle der Verwendung für eine Gemüseplatte verschiedene Arten von Gemüse eingefüllt. Die Oberseite 13 der Bodenplatte 9 ist glatt und ohne Vorsprünge ausgebildet, so daß beim Abziehen der Bodenplatte der Aufbau des Gemüses nicht zerstört wird. Ebenso sind auch die Seitenwände 2 an ihrer Innenfläche und die Trennplatten 4 glatt und ohne Erhebung ausgebildet, so daß beim Abheben des Gehäuses 3 keine Speisenreste im Gehäuse zurückbleiben.

Die Deckplatte 1 und die Bodenplatte 9 sind mit Lochungen 14 ausgebildet, so daß ein Durchtritt des Wassers ermöglicht wird.

Die Ausführungsform nach Fig. 4 und 5 unterscheidet sich von der Ausführungsform nach Fig. 1 bis 3 lediglich durch den rechteckigen Grundriß.

Fig. 7 und 8 zeigen wieder ein Gerät mit rechteckigem Grundriß ähnlich der Fig. 4 und 5. Die Bodenplatte 15 besteht hier aus ferromagnetischem Material. An die Seitenwände 16 sind Magnete 17 angesetzt, welche die Bodenplatte 15 am Gehäuse festhalten, jedoch das seitliche Abziehen mittels des Handgriffes 11 gestatten.

Fig. 9 und 10 zeigen eine Verkaufspackung 18, welche eineBegrenzungswand 19 und Zwischenwände 20 aufweist, wodurch Fächer 21 gebildet werden, in welchen die Speisen sich in tiefgefrorener Form befinden. Die Zwischenwände 20 sind in gleicher Anordnung wie die Trennplatten 4 des Gerätes nach Fig. 1 und 2 und die Begrenzungswand 19 entspricht in ihrer Form den Seitenwänden 2. Die Verkaufspackung 18 weist einen vorspringenden Rand 22 auf, welcher sich um den halben Umfang der Begrenzungswand 19 erstreckt. Nach Abreissen einer den unteren Rand 23 der Verkaufspackung 18 abschließenden Folie wird der vorspringende Rand 22 in die Schieberführung 10 des Gerätes nach Fig. 1 und 2 eingeschoben. Die Verkaufspackung 18 weist Anschläge 24 auf, welche mit den Enden 25 der Schieberführung 10 zusammenwirken, wodurch gewährleistet ist, daß die Zwischenwände 20 der Verkaufspackung 18 deckungsgleich mit den Trennplatten 4 des Gerätes stehen. Das Gerät wird nun auf die Verkaufspackung 18 aufgesetzt, wobei der vorspringende Rand 22 in die Schieberführung 10 geschoben wird. Nach Wenden der Verkaufspackung 18 mit dem aufgesetzten Gerät fallen die tiefgefrorenen Blöcke in die Fächer 12 des Gerätes. Die Zwischenwände

20 sind etwas dicker ausgeführt als die Trennplatten 4, so daß die in den Fächern 21 der Verkaufspackung 18 befindlichen Speisen leicht in die Fächer 12 des Gerätes fallen können.

Fig. 11 zeigt ein Zwischenstück 26 für die Stapelung von gefüllten Geräten nach Fig. 1 und 2 im Kühlhaus. Das Zwischenstück 26 weist einen Ringbord 27 auf, so daß es am Gehäuse 3 des Gerätes zentriert ist. An der Oberseite weist das Zwischenstück 26 eine Standfläche 28 für das nächstfolgende Gerät auf. Der Durchmesser dieser Standfläche 28 ist so groß bemessen, daß das aufgestellte Gerät durch die Schieberführung 10 auf der Standfläche 28 zentriert wird. Eine Durchbrechung 29 ermöglicht den Durchtritt des Handgriffes 7. Auf diese Weise wird ermöglicht, gefüllte Geräte im Kühlhaus in platzsparender Weise zu stapeln.

Patentansprüche:

Patentansprüche:

1. Gerät zum Kochen, Wärmen, Vorbereiten und/oder Anrichten von verschiedenen Speisen gemeinsam, beispielsweise Gemüsen, mit einem, gegebenenfalls Durchbrechungen aufweisenden, Gehäuse (3), welches aus Seitenwänden (2, 16), mehreren Trennplatten (4) und gegebenenfalls einer Deckplatte besteht und durch eine im wesentlichen ebene Bodenplatte (9, 15) abgeschlossen ist, wobei die Trennplatten (4) quer zur Bodenplatte (9, 15) verlaufen, dadurch gekennzeichnet, daß die Bodenplatte (9, 15) in ihrer Ebene verschiebbar an das Gehäuse angeschlossen ist und quer zu den Seitenwänden (2, 16) am Gehäuse geführt und von diesem abziehbar ist.

2. Gerät nach Anspruch 1, dadurch gekennzeichnet, daß die Innenflächen der Seitenwände (2, 16), die Trennplatten (4) und die obere Oberfläche der Bodenplatte (9, 15) glatt ausgebildet sind.

3. Gerät nach Anspruch 1 oder 2, dadurch gekennzeichnet, daß die Bodenplatte (9) in einer Schieberführung (10) der Seitenwände (2) gehalten ist.

4. Gerät nach Anspruch 1 oder 2, dadurch gekennzeichnet, daß die Bodenplatte (15) zumindest teilweise aus ferromagnetischem Material besteht und daß die Bodenplatte (15) durch zumindest einen am Gehäuse (3) festgelegten Magnet (17) an diesem gehalten ist.

5. Gerät nach einem der Ansprüche 1 bis 4, dadurch gekennzeichnet, daß die Trennplatten (4) einzeln lösbar in das Gehäuse (3) einsetzbar sind.

6. Gerät nach einem der Ansprüche 1 bis 5, dadurch gekennzeichnet, daß die Trennplatte (4) von einzelnen sternförmig angeordneten Platten gebildet ist, die durch einen zentralen Bolzen (5), beispielsweise einen Schraubbolzen, im Gehäuse (3) gehalten sind.

7. Gerät nach einem der Ansprüche 1 bis 6, dadurch gekennzeichnet, daß die Bodenplatte (9, 15) an ihrem Rand einen Handgriff (11) aufweist.

8. Gerät nach einem der Ansprüche 1 bis 7, dadurch gekennzeichnet, daß es aus lebensmittelechtem, hitzebeständigem, kältebeständigem und wasserbeständigem Material besteht.

9. Einrichtung zum Füllen eines Gerätes nach einem der Ansprüche 1 bis 8, gekennzeichnet durch eine Verkaufspackung (18), welche Begrenzungswände (19) und Zwischenwände (20) in gleicher Anordnung wie die Seitenwände (2, 16) und Trennplatten (4) des Gehäuses (3) des Gerätes aufweist, wobei die Verkaufspackung (18) und das Gehäuse (3) mit Anschlagmitteln (24, 25) ausgestattet sind, welche die deckungsgleiche Lage der Begrenzungswände (19) mit den Seitenwänden (2, 16) und der Zwischenwände (20) mit den Trennplatten (4) bestimmen.

10. Einrichtung nach Anspruch 9, dadurch gekennzeichnet, daß die Verkaufspackung (18) einen vorstehenden Rand (22) für den Eingriff in die Schieberführung (10) des Gehäuses (3) aufweist.

11. Einrichtung zum Stapeln von Geräten nach einem der Ansprüche 1 bis 8, gekennzeichnet durch ein Zwischenstück (26), dessen eine Oberfläche eine Standfläche (28) für die Bodenplatte (9) des Gerätes und dessen andere Oberfläche Auflageflächen für die Abstützung auf
der Deckplatte (1) des Gerätes und eine Durchtrittsöffnung (29) für den Handgriff (7) des Gehäuses aufweist.

1984 10 31      /Gr.

**FIG.1**

**FIG.2**

**FIG.3**

0142491

2/3

FIG.4

FIG.5

FIG.6

FIG.7

FIG.8

FIG.9

FIG.10

FIG.11

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | FR-A- 821 455 (F. GLINNE)  <br> * Insgesamt * <br> --- | 1-3, 7,8 | A 47 J 36/20 |
| X | DE-C- 220 495 (R. RITZENHOFF) <br> * Insgesamt * <br> --- | 1,2,7, 8 | |
| X | DE-C- 209 588 (R. RITZENHOFF) <br> * Insgesamt * <br> --- | 1-3, 7,8 | |
| A | CH-A- 509 068 (M. BÜHLER) <br> * Figur 2 * <br> --- | 4 | RECHERCHIERTE SACHGEBIETE (Int. Cl.4) |
| A | US-A-1 791 889 (G. DUNCAN) <br> * Insgesamt * <br> --- | 1,5 | A 47 J |
| D,A | CH-A- 286 818 (T. WAGNER) <br> * Insgesamt * <br> --- | 1,6 | |
| | -/- | | |

Der vorliegende Recherchenbericht wurde für alle Patentansprüche erstellt.

| Recherchenort | Abschlußdatum der Recherche | Prüfer |
|---|---|---|
| DEN HAAG | 07-02-1985 | SCHARTZ J. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

## EUROPÄISCHER RECHERCHENBERICHT

EP 84 89 0213

**Europäisches Patentamt**

### EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | US-A-1 909 983 (M. POWELL)  *  Figuren 1,2 *  ----- | 1,6 | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 07-02-1985 | SCHARTZ J. |